# FASCICULE DE BREVET EUROPEEN

(11) **EP 0 351 342 B1**
(45) Date de publication et mention de la délivrance du brevet: **08.06.1994**
(21) Numéro de dépôt: 89440073.8
(22) Date de dépôt: 12.07.1989
(51) Int. Cl.: B60P 3/08

(54) **Unité routière à carrosserie porteuse déposable**
Strasseneinheit mit absetzbarer Trägerkarosserie
Road unit with a removable body carrier

(30) Priorité: 13.07.1988 FR 8809713
(43) Date de publication de la demande: 17.01.1990
(73) Titulaire: LOHR INDUSTRIE S.A., F-67980 Hangenbieten (FR)
(72) Inventeur: Lohr, Robert, F-67980 Hangenbieten (FR)
(74) Mandataire: Metz, Paul

(56) Documents cités:
- EP-A- 0 214 919
- FR-A- 2 535 659
- FR-A- 2 582 609

## Description

La présente invention se rapporte à une unité routière prévue pour constituer à l'aide d'un véhicule moteur un convoi routier articulé à carrosserie déposable.

On connaît les ensembles routiers articulés formés d'un véhicule tracteur et d'une semi-remorque. Le véhicule tracteur est équipé, au niveau de son train arrière, d'un organe d'accouplement avec la semi-remorque. Cet organe d'accouplement est connu communément sous le nom de sellette.

Ces tracteurs présentent une spécificité importante en raison même de leur particularité technique et du mode d'accouplement à la semi-remorque. Cette spécificité les condamne à s'accoupler uniquement à des semi-remorques à l'exclusion de tout autre type de remorques.

On connaît aussi les convois routiers formés d'un véhicule porteur attelé à une remorque. Le véhicule porteur est équipé à l'arrière de son châssis d'un organe d'accouplement connu communément sous la dénomination de crochet d'attelage. Dans ce cas, le véhicule, porteur et moteur, est un ensemble châssis-cabine équipé d'une carrosserie portée par le châssis sur lequel est solidarisé le crochet d'attelage.

Bien que le champ des utilisations d'un véhicule utilitaire soit déjà vaste, les impératifs de rentabilité d'un parc de véhicules utilitaires forcent les exploitants à une plus grande universalité d'usage.

Ainsi, les exploitants souhaitent pouvoir utiliser aussi les tracteurs spécifiques ci-dessus pour d'autres applications particulières de transport, par exemple le transport de voitures automobiles.

Dans cet esprit de rentabilité et pour diminuer la durée d'indisponibilité correspondant aux transformations et à la pose des équipements dans les ateliers des préparateurs, on connaît les carrosseries amovibles à la manière de structures dissociables spécialisées à monter sur les châssis nus.

Un exemple typique dans le domaine des porte-voitures concerne la structure porteuse amovible décrite dans le brevet déposé en ITALIE au nom de la société ROLFO sous le numéro 539O2B/82.

A l'analyse, cette invention antérieure ne se rapporte qu'à une simple structure à rapporter classiquement sur un châssis porteur ou autre, à la manière d'une charge immobilisée, c'est-à-dire par exemple d'un conteneur fixé par quatre liaisons dissociables, sur le châssis du véhicule porteur.

Cette structure porteuse est constituée essentiellement par un bâti amovible à poser et à verrouiller sur un châssis simple sans entraîner aucune modification technique fonctionnelle du véhicule porteur. Elle ne comporte d'autres éléments techniques que ceux nécessaires au soutien de la charge et laisse le crochet d'attelage solidaire du châssis, de manière à garder au véhicule porteur son entière individualité fonctionnelle propre. Pour des raisons de facilité de fabrication et de rapidité d'intervention en cas de transplantation de carrosserie, le véhicule porteur n'est pas transformé.

En raison du poids de cette carrosserie, la manoeuvre de substitution de cette structure sur un châssis donné nécessite l'emploi de moyens extérieurs de manutention non disponibles partout, même pas sur les aires de déchargement.

Ainsi, ce type de structure porteuse ne comporte aucun élément mécanique d'accouplement autre que ceux destinés à la fixer sur le châssis. Elle ne comporte pas, notamment, de support pour le crochet d'attelage qui, s'il existe, reste solidaire des longerons du châssis.

La présente invention a précisément pour but de rendre possible une meilleure exploitation d'un véhicule moteur tracteur du type semi-remorque en augmentant ses possibilités techniques d'accouplement, de reception et de solidarisation d'une structure porteuse sur son châssis, et, par conséquent, ses possibilités d'utilisation commerciales.

La demande européenne antérieure EP-A-0 214 919 au nom de la demanderesse, la société LOHR, se rapporte à une unité routière articulée porte-voitures à carrosserie-camion dissociable du châssis-cabine, c'est-à-dire du véhicule moteur.

Selon cette invention, l'unité routière articulée comprend une carrosserie dissociable portée par le véhicule moteur et une remorque attelée à la carrosserie dissociable.

La carrosserie dissociable porte le crochet d'attelage monté sur un support fixé sous sa partie arrière.

Cette carrosserie dissociable est reliée de façon rigide et directe au châssis du véhicule moteur par sa base-châssis qui comporte un moyen d'accouplement et des moyens d'immobilisation coopérant avec le châssis du véhicule moteur.

Pour utiliser, avec ce type d'unité routière articulée, des remorques équilibrées à châssis bas, le point d'accouplement de l'extrémité du timon doit se situer à un niveau tel que le timon se trouve dans une position horizontale ou sensiblement horizontale en configuration de roulage. Cette condition est impérative pour des raisons de confort et de sécurité de roulage.

Par ailleurs, pour augmenter la sécurité du roulage, il y lieu de diminuer le couple du report de charge engendré par une partie importante du poids de la remorque transmise par le timon sur le crochet d'attelage.

Dans le type de véhicules porteurs articulés à carrosserie-camion déposable tels que décrits dans le brevet antérieur mentionné ci-dessus, celle-ci comporte aussi bien un appui avant qu'un appui arrière afin de rester stable dans sa position déposée attelée et présenter ainsi des conditions d'exploitation intéressantes.

Selon ce brevet antérieur, l'appui avant est réalisé de façon traditionnelle par des béquilles, alors que l'arrière est soutenu par un essieu additionnel.

La simple suppression de l'essieu arrière additionnel provoquait un couple du report de charge important non totalement compensé sur l'arrière du camion en raison de l'effet de levier provenant de la distance entre l'essieu du camion et le point de fixation du support de crochet d'attelage.

Cet éloignement engendrerait un couple dangereux de basculement qui, dans certaines configurations de chargement et pour certains types de camion, ne permet plus de remplir les conditions de sécurité et les performances en roulage.

La présente invention a pour but de garantir une bonne sécurité de roulage à chargement maximum en réduisant à une valeur faible le couple de basculement et de pouvoir déposer rapidement la carrosserie-camion sans dételer la remorque, car la carrosserie-camion tient toute seule dans cette position grâce à la coopération de l'appui avant avec un appui intermédiaire situé au voisinage du point d'attelage, completé ou non par des béquilles additionnelles au niveau du support de crochet d'attelage.

A cet effet, l'invention se rapporte à une unité routière du type défini dans le préambule de la revendication 1 et connu du document EP-A-0 214 919 et est caractérisée par les caractéristiques contenues dans la seconde partie de ladite revendication.

Outre l'adaptation aux impératifs de rentabilité d'exploitation par la dépose rapide, les caractéristiques de l'invention permettent de lui confier les multiples avantages suivants :
. dissociation facile et instantanée et transformation rapide en tracteur de semi-remorque et inversement adaptation tout aussi rapide pour devenir porteurremorqueur dans un convoi routier ;
. avantages liés au caractère auto-porteur de la carrosserie amovible qui fait partie intégrante du convoi ;
. opérations de chargement et de déchargement en l'abscence du véhicule porteur ;
. dépose et pose par une personne unique non spécialisée, par exemple le chauffeur et sans moyen extérieur;
. simplicité et faible coût de préparation du châssis et temps d'immobilisation du véhicule moteur en atelier chez le préparateur ;
. caractère interchangeable intégral: la même carrosserie peut être montée sur tous les véhicules porteurs préparés de cette façon ;
. possibilité d'organiser ses circuits en relais de transport ;

Un autre avantage réside dans le fait de pouvoir, grâce à la forme particulière de l'arrière-châssis de la carrosserie déposable rapprocher le crochet d'attelage de l'essieu arrière, afin de diminuer le couple induit par le rapport de charge de la remorque à travers le crochet d'attelage.

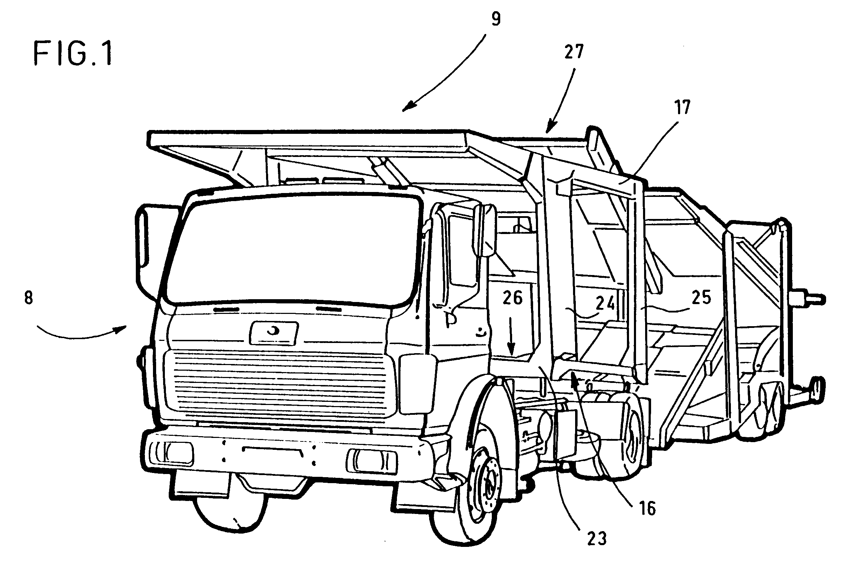

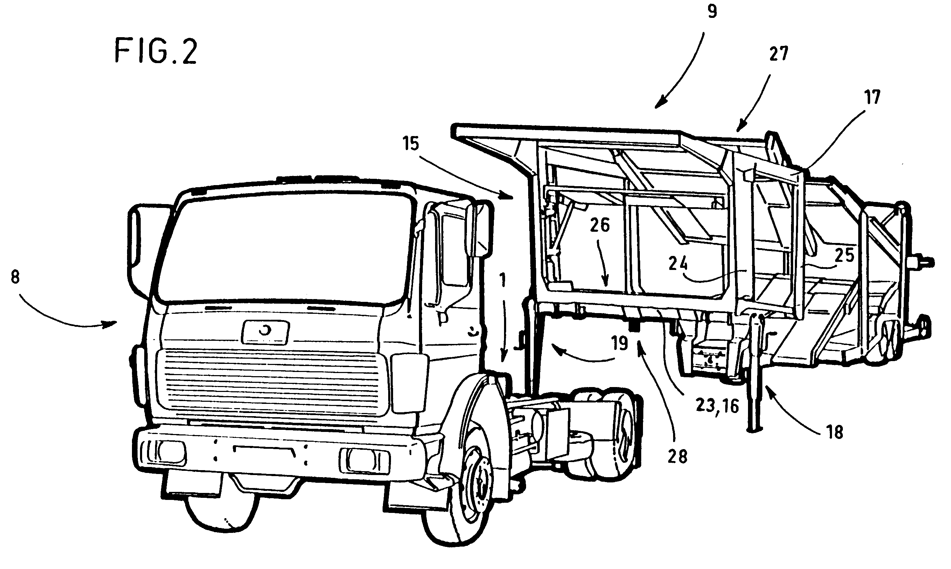

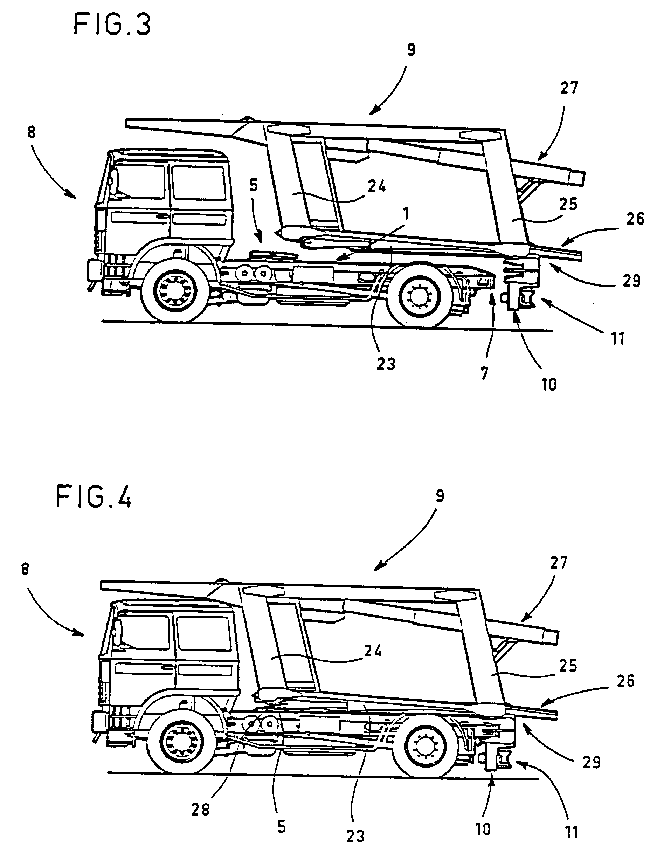

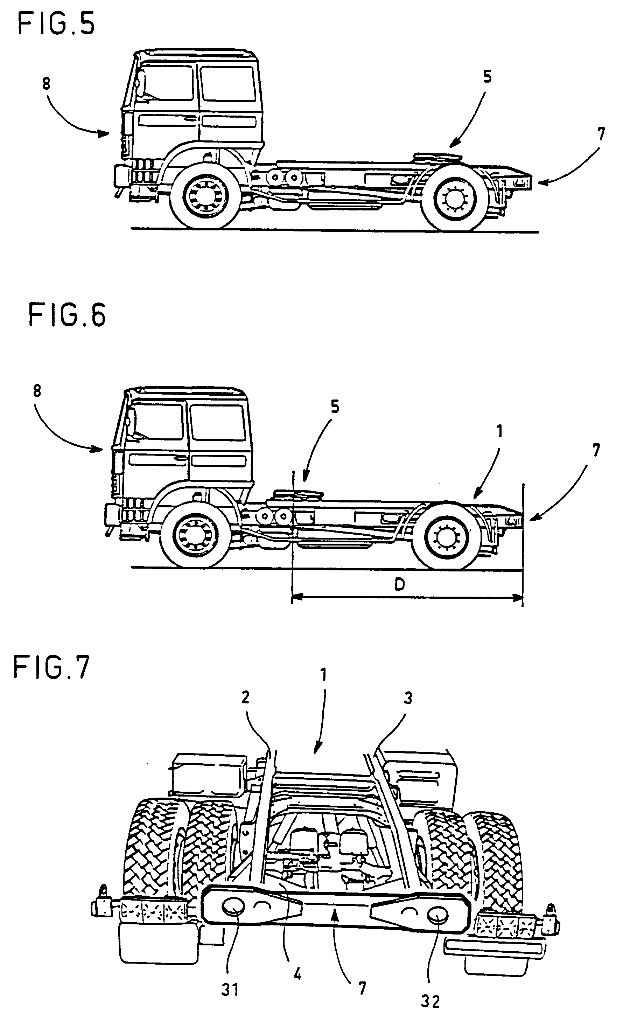

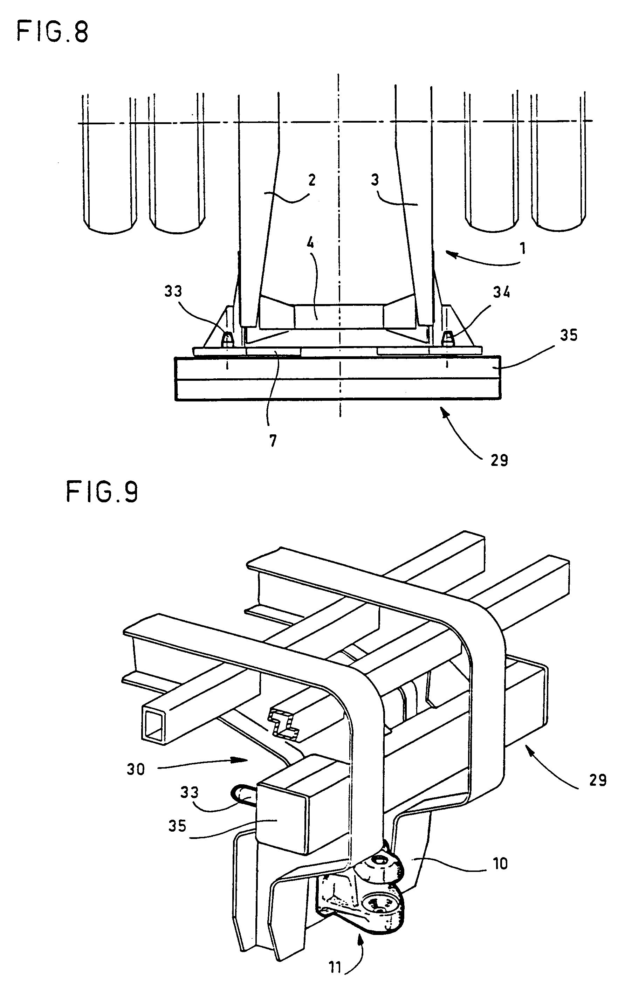

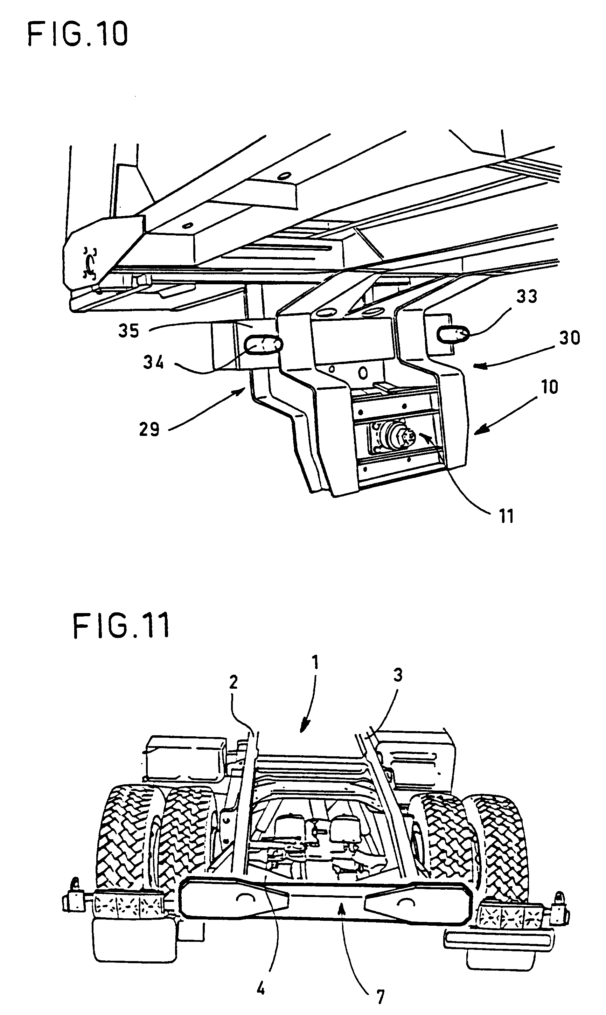

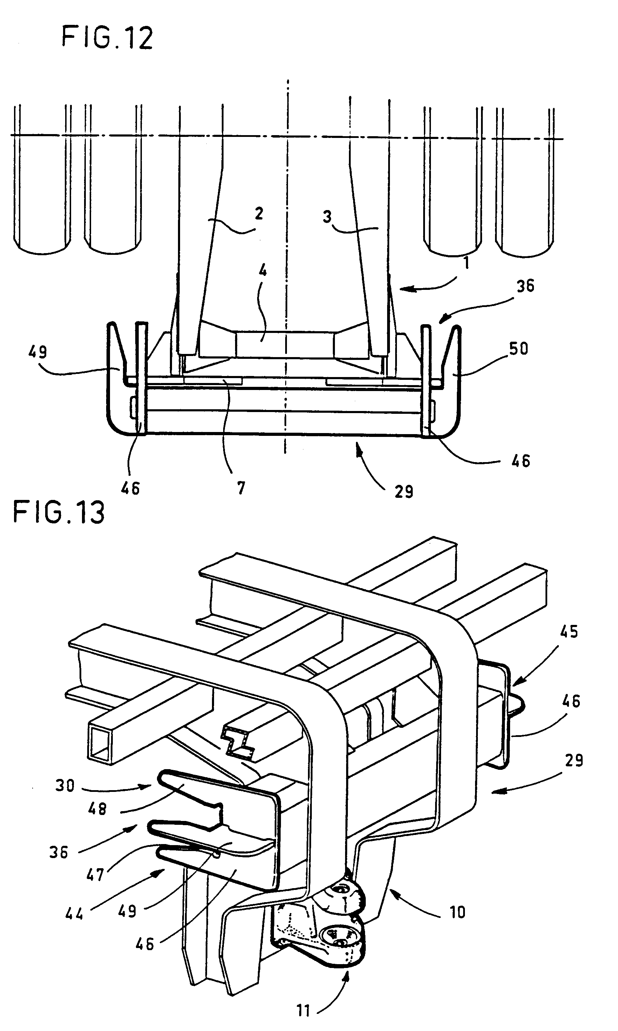

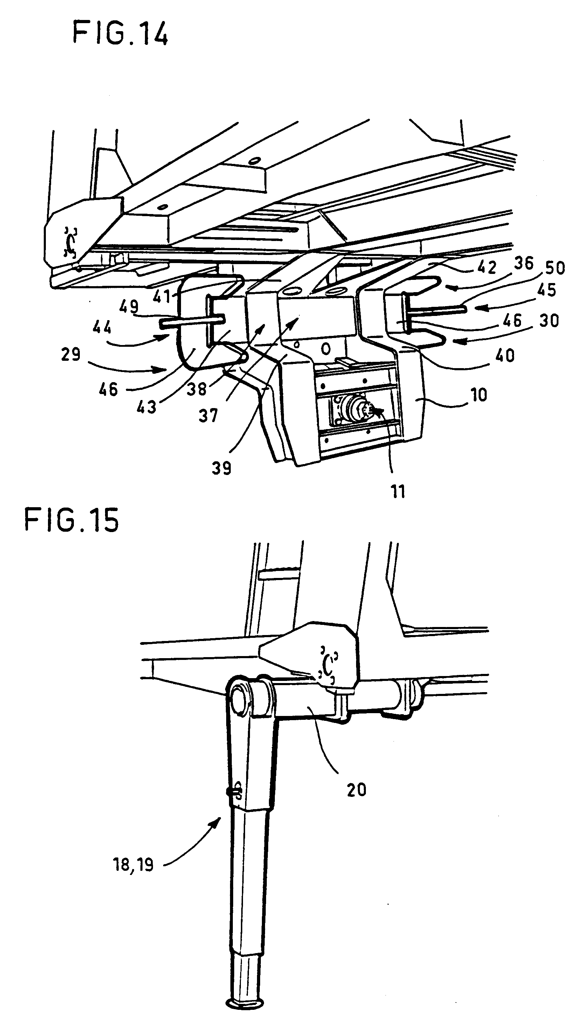

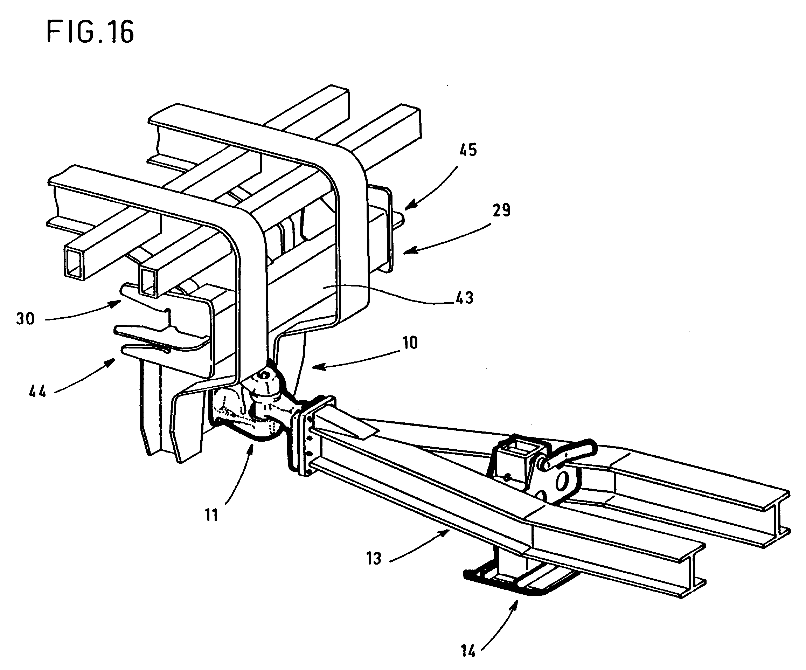

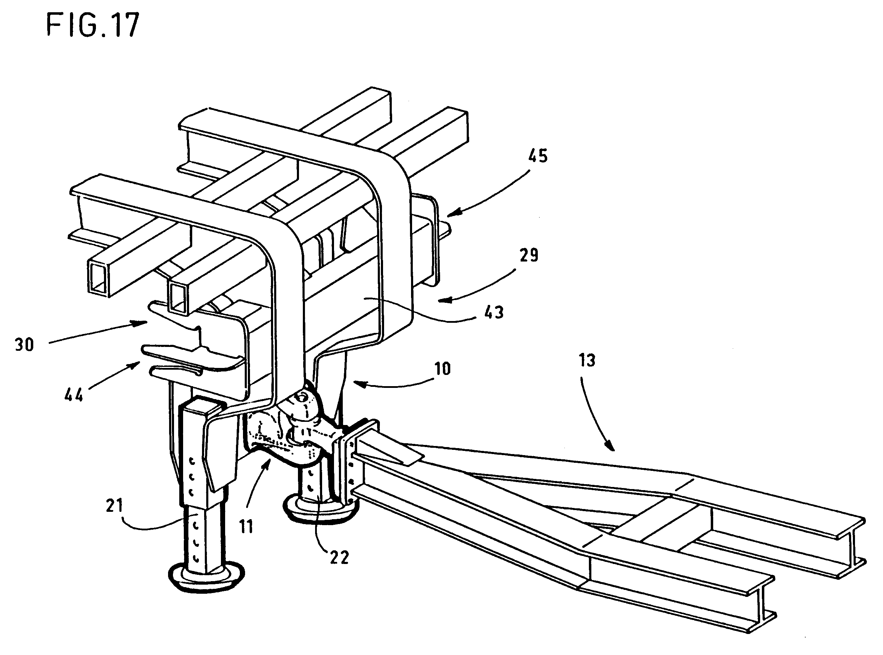

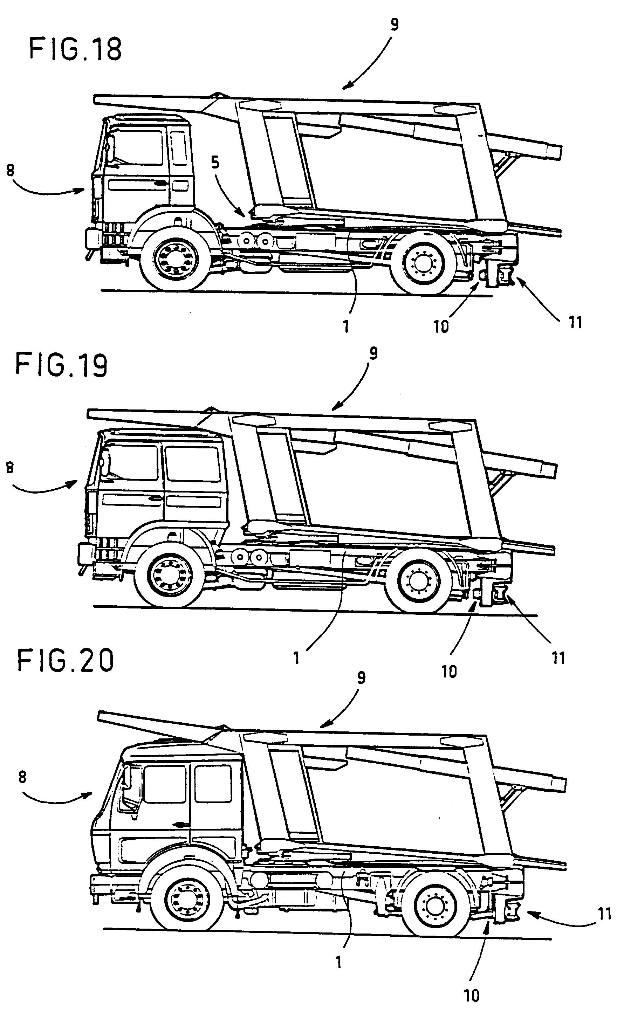

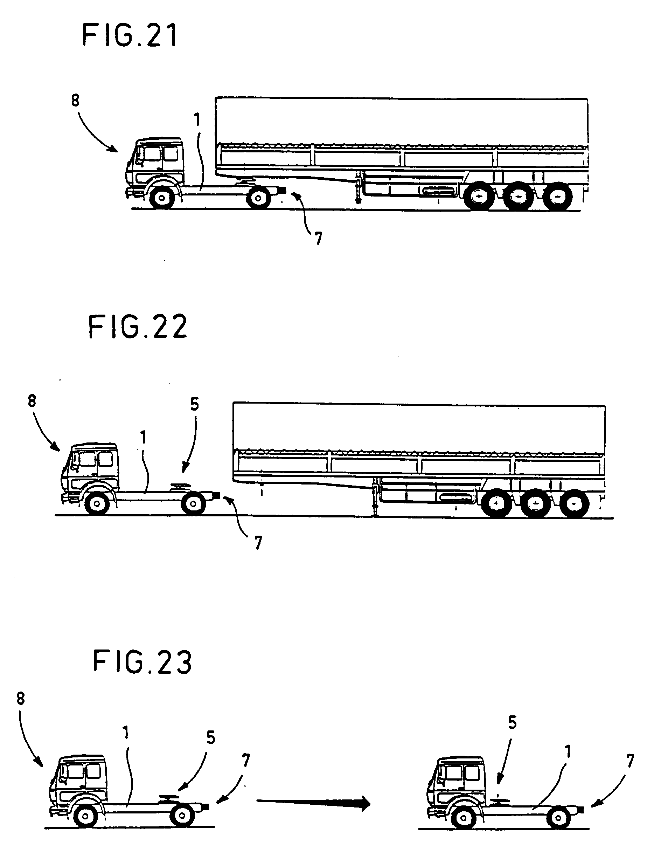

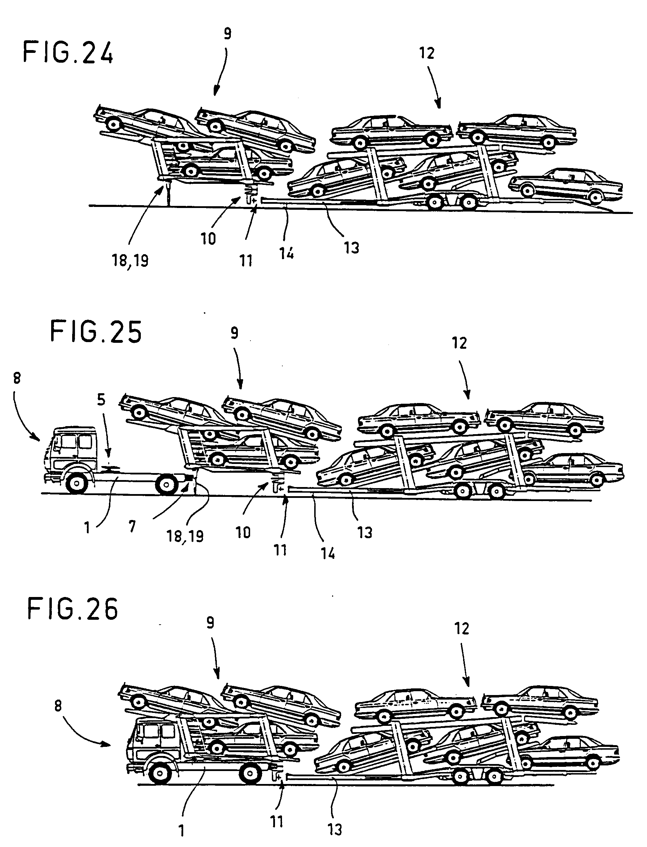

La présente invention sera bien comprise à la lecture de la description qui suit, effectuée à titre d'exemple non limitatif, dans le cadre d'une application à un convoi porte-voitures, sur un mode d'exécution en référence aux dessins accompagnants dans lesquels :
. la figure 1 est une vue générale en perspective du convoi routier constitué, carrosserie portée et remorque attelée ;
. la figure 2 est une vue générale en perspective du convoi routier dissocié, d'une part le véhicule moteur aménagé et d'autre part la carrosserie déposée et la remorque attenante attelée;
. la figure 3 est une vue de profil de l'unité routière selon l'invention, carrosserie amovible décalée, au-dessus du véhicule porteur avant mise en place ;
. la figure 4 est une vue de profil de l'unité routière selon l'invention, carrosserie déposable solidarisée au véhicule porteur-remorqueur ;
. la figure 5 est une vue de profil d'un tracteur en configuration semi-remorque d'origine, c'est-à-dire sellette vers l'arrière ;
. la figure 6 est une vue de profil du même véhicule moteur après transformation en configuration de réception de la carrosserie déposable pour devenir un porteur ;
. la figure 7 est une vue en perspective simplifiée montrant l'extrémité du châssis pourvue de sa plaque-traverse de centrage selon une première variante ;
. la figure 8 est une vue en plan, correspondant à la figure 7 du mécanisme d'autocentrage accouplé ;
. la figure 9 et 10 sont des vues en perspective représentant le mécanisme d'autocentrage arrière et le support de crochet d'attelage vu respectivement de l'arrière, côté remorque, et de l'avant, côté porteur, selon la première variante ;
. la figure 11 est une vue en perspective simplifiée montrant l'extrémité du châssis pourvue de sa plaque-traverse de centrage selon une deuxième variante ;
. la figure 12 est une vue en plan, correspondant à la figure 11 du mécanisme d'autocentrage accouplé ;
. les figures 13 et 14 sont des vues en perspective représentant le mécanisme d'autocentrage arrière et le support de crochet d'attelage vu respectivement de l'arrière et de l'avant selon la deuxième variante ;
. la figure 15 est une vue en perspective représentant une béquille escamotable auto-porteuse en position active de soutien ;
. la figure 16 est une vue en perspective illustrant l'appui arrière d'auto-portage au niveau du timon de remorque pour conférer à la carrosserie son caractère auto-porteur intégral ;
. la figure 17 est une vue en perspective du support de crochet d'attelage et de béquilles complémentaires de soutien pour la partie arrière conférant à la carrosserie un caractère auto-porteur intégral ;
. les figures de 18 à 20 sont des vues de profil, carrosserie solidarisée au véhicule porteur, pour différents types de véhicules porteurs à empattements différents, respectivement à cabine simple, à cabine double, longue et extra-longue ;
. les figures 21 à 26 sont des vues de profil d'un convoi utilisant l'unité routière selon l'invention dans les configurations suivantes :
   - convoi articulé composé d'une semi-remorque et d'un véhicule tracteur (figure 21)
   - convoi articulé dissocié montrant le véhicule tracteur d'une part et la semi-remorque auto-portée d'autre part (figure 22)
   - véhicule tracteur avant son adaptation pour devenir véhicule porteur et après son adaptation (figure 23)
   - convoi articulé chargé de voitures, formé de la carrosserie déposable et de sa remorque, en attente sur une aire de stockage (figure 24)
   - présentation du véhicule porteur-remorqueur sous la carrosserie déposable en position auto-portée attelée à sa remorque (figure 25)
   - carrosserie montée sur le véhicule porteur-remorqueur et accouplée à celui-ci, constituant un convoi routier complet, prêt au départ (figure 26).
. les figures de 27 à 30 sont des vues de profil d'un convoi respectivement carrosserie déposée puis portée dans le cadre d'applications à d'autres types de carrosseries porteuses :
   - figures 27 et 28, exemple d'un convoi du type à remorque semi-portée ;
   - figures 29 et 30, exemple d'un convoi du type à remorque avec rond d'avant-train.
. la figure 31 est une vue schématique en perspective de la forme générale technique de la base-châssis de la carrosserie déposable et des moyens de verrouillage et de centrage au châssis-camion dans une première version ;
. la figure 32 est une vue schématique en perspective identique à celle de la figure 31 relative à une deuxième version ;
. les figures 33 et 34 sont des vues de profil illustrant la forme particulière de l'arrière-châssis de la carrosserie déposable montrant dans le cas des deux versions ci-dessus la position du crochet d'attelage par rapport à l'essieu arrière ;
. les figures 35 et 36 sont des vues schématiques en perspective de deux formes techniques dérivées et équivalentes de la base-châssis de carrosserie et du châssis-camion selon deux variantes équivalentes.

L'idée générale inventive consiste pour une part, à adapter ou à mettre en condition un véhicule tracteur du type semi-remorque en vue de recevoir une structure porteuse, ledit véhicule tracteur devenant porteur-remorqueur mais gardant une aptitude à la transformation rapide en véhicule tracteur.

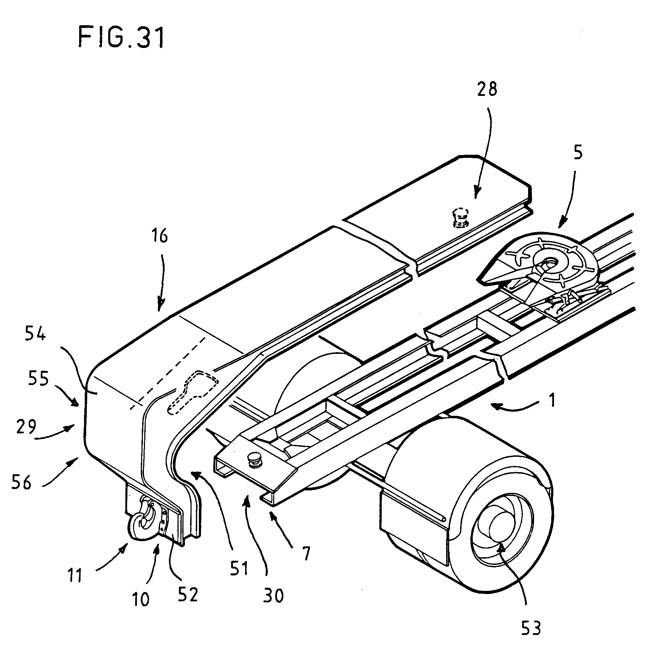

De plus et d'une façon plus générale, l'idée générale inventive consiste à prévoir un châssis de carrosserie déposable à monter sur un châssis de camion présentant, en partie avant, des moyens d'appui-verrouillage avec le châssis de camion, le châssis de carrosserie comprenant, à l'arrière, des zones d'appui complémentaire, des moyens de centrage et un retour vers le bas portant à son extrémité inférieure le crochet d'attelage comme le montrent les figures 31 à 34.

La partie arrière du châssis de cette carrosserie déposable affecte la forme générale d'une crosse par exemple, d'une crosse de pistolet.

Le retour vers le bas peut comporter, à sa naissance, une forme incurvée constituant un retrait destiné à envelopper l'arrière du châssis. Ce retrait est compensé par une incurvation vers l'avant se terminant perpendiculairement vers le bas.

Le crochet d'attelage se trouve ainsi notablement rapproché de l'essieu arrière pour diminuer d'autant le couple de réaction dû au report de charge provenant de la remorque transmis par le crochet d'attelage.

Par ailleurs, la carrosserie porteuse présente un état porté dans lequel elle est solidarisée au châssis de camion et un état déposé dans lequel elle se trouve stable et immobile soutenue au moins en trois points, prête à être emportée par le véhicule porteur après une simple manoeuvre d'accouplement.

L'invention concerne également la carrosserie déposable faisant corps avec son porteur.

On utilisera ci-après les termes de véhicule moteur, de véhicule tracteur, de véhicule porteur-remorqueur. Il faut comprendre par ceux-ci les significations suivantes :
. véhicule moteur : il s'agit du terme général désignant de façon générale l'ensemble des véhicules particuliers ci-dessous ;
. véhicule tracteur : il s'agit d'un véhicule moteur destiné uniquement à la traction d'une semi-remorque ;
. véhicule porteur : il s'agit d'un véhicule moteur portant une charge quelconque avec ou sans fonction de traction de remorque.

Par ailleurs, il est bien entendu que l'application aux convois routiers porte-voitures ne doit aucunement être considérée comme limitative.

Le véhicule moteur comprend un châssis 1 formé de deux longerons 2 et 3 reliés entre eux en extrémité par une traverse-entretoise 4.

Le châssis porte, venu d'usine, un organe d'accouplement, par exemple une sellette 5, au niveau de sa partie arrière. Il est ainsi équipé en véhicule tracteur en vue, par exemple, de tracter une semi-remorque.

Le véhicule tracteur est préparé en déplaçant la sellette 5 vers l'avant par divers moyens, par exemple en rapportant des longerons auxiliaires sur lesquels est fixé de façon amovible le corps de la sellette 5.

Ensuite, l'arrière de son châssis est modifié et adapté de façon plus ou moins importante pour garder une distance constante "D" entre la position de la sellette et l'extrémité du châssis, quels que soient le type et la marque commerciale du véhicule moteur ainsi préparé afin de garantir l'interchangeabilité.

Pour des raisons de clarté la distance "D" est représentée sur la figure 6.

Le tracteur ainsi préparé est conditionné pour devenir un porteur.

Cette caractéristique est illustrée par les figures de 18 à 20 qui représentent plusieurs types de véhicules moteurs d'empattements différents, tous adaptables en vue de recevoir la carrosserie déposable.

Sur l'extrémité du châssis ramené à la longueur appropriée, on solidarise une plaque-traverse arrière 7 d'accouplement horizontal, destinée à coopérer avec un mécanisme de centrage pour la réalisation d'un moyen d'autocentrage comme on le décrira ci-après.

Le châssis du véhicule moteur 8 ainsi préparé est destiné à recevoir une structure porteuse, par exemple une carrosserie 9 du type notamment porte-voitures et devenir ainsi porteur.

Selon l'une des caratéristiques importantes de l'invention, cette carrosserie comporte un support 10 de crochet d'attelage 11 intégré au corps de la carrosserie en partie arrière inférieure.

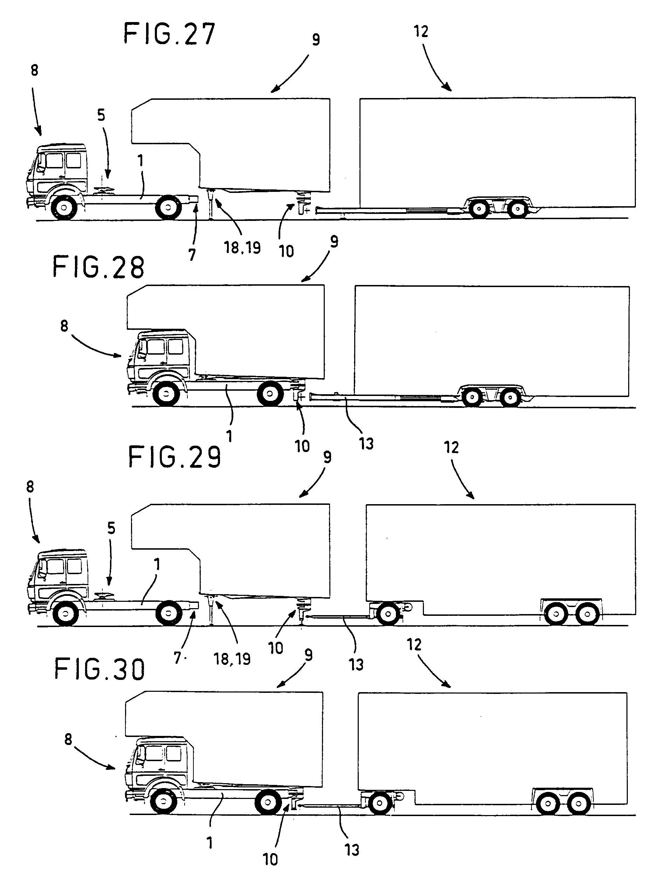

Ce crochet d'attelage est destiné à assurer la liaison articulée avec une remorque 12 par exemple à essieux centraux, à rond d'avant-train ou toute autre, comme représenté sur les figures 24 à 30. Il est destiné également à supporter l'arrière de la carrosserie lorsque déposée, ceci par l'intermédiaire du timon 13 de remorque qui comporte un ou plusieurs pieds 14 de reprise d'effort disposés par exemple à environ mi-longueur, destinés à assurer avec le support de crochet d'attelage la fonction de soutien arrière pour le maintien dans sa position horizontale stable.

La carrosserie amovible se compose d'un bati 15 formé d'une base-châssis 16 surmontée d'une ossature 17 présentant un caractère auto-porteur conféré sur l'avant, par deux béquilles télescopiques 18 et 19 rabattables dans une position de repos, escamotables ou amovibles et, sur l'arrière, par un soutien apporté par le crochet d'attelage à travers son support en appui sur le timon, lui-même en appui de reprise d'effort sur le sol par le ou les pieds 14.

Un exemple de béquilles rabattables est représenté sur la figure 15. Elles sont montées par exemple pivotantes autour d'un axe 20.

Un soutien arrière équivalent est apporté par deux béquilles télescopiques additionnelles telles que 21 et 22, montées par exemple rabattables dans une position de repos au niveau du support de crochet d'attelage, de part et d'autre de celui-ci (figure 17).

La base-châssis 16 de la carrosserie déposable forme un support inférieur 23 prolongé latéralement, de chaque côté, par des poteaux verticaux ou légèrement inclinés tels que 24 et 25 supportant, par exemple au-dessus du châssis, un plan de chargement inférieur 26 et, à un niveau supérieur, un ou plusieurs plans de chargement supérieurs mobiles tels que 27 individuels ou un plan unique.

Bien entendu, d'autres conformations techniques s'avèrent tout aussi possibles et la sellette utilisée comme exemple ci-dessus peut être remplacé par tout organe équivalent.

Comme indiqué, la carrosserie déposable est une structure entièrement soutenue en position horizontale qui peut donc être abandonnée par son véhicule porteur en un endroit quelconque, par exemple sur une aire de chargement ou de déchargement avec sa remorque attelée, constituant ainsi une unité de transport à l'état immobile, en attente, prédisposée au chargement ou au déchargement qui peuvent s'effectuer à tout moment, pendant l'affectation du véhicule porteur à d'autres tâches de transport.

La carrosserie déposable présente à l'avant, en sous-face, un axe vertical 28, appelé classiquement cheville ouvrière, destiné à coopérer avec la sellette 5 convenablement mise en place pour réaliser à l'avant un point d'appui à verrouillage latéral, la fonction pivot étant neutralisée par l'immobilisation arrière.

Cet axe vertical est analogue à la cheville ouvrière que présente en sous-face avant les semi-remorques par laquelle sont transmises toutes les sollicitations mécaniques de traction dues au roulage.

L'immobilisation de la carrosserie déposable sur le véhicule porteur est complétée de la façon suivante.

La partie arrière de la base en plateau du bâti est prolongée vers le bas par un retour 29 comprenant le support 10 du crochet d'attelage et un moyen d'immobilisation et de centrage sous la forme d'un mécanisme d'autocentrage 30, par exemple du type à encastrement, coopérant avec la plaque-traverse 7 d'accouplement horizontal.

On examinera ci-après deux variantes de moyens d'immobilisation et de centrage qui sont des mécanismes ou des structures d'autocentrage 30 en référence aux figures de 7 à 14.

La première variante concerne un mécanisme simple à doigts de centrage (figures de 7 à 10).

Selon cette variante, la plaque-traverse arrière 7 comporte, de part et d'autre de son plan transversal médian, des ouvertures gauche 31 et droite 32 dans lesquelles viennent s'engager des doigts de centrage coniques correspondants, 33 et 34, portés par une platine-support 35 solidaire du retour 29.

Selon un perfectionnement, les ouvertures 31 et 32 sont éventuellement garnies de douilles (non représentées) dans lesquelles viennent s'engager les doigts de centrage.

La deuxième variante est un mécanisme 36 à rampes de convergence. La plaque-traverse arrière 7 affecte une forme rectangulaire ou possède des extrémités rectangulaires (figures de 11 à 14).

Le mécanisme femelle de réception, c'est-à-dire celui accueillant le corps de la plaque traverse 7, présente une zone rectangulaire de réception 37 constituant le fond d'un volume convergent 38 par deux rampes convergentes inférieures 39,40 et supérieures 41,42 formées par le retour des poutres du support arrière de la carrosserie déposable.

Cette zone est limitée latéralement par une plaque de fond 43 dont chacune des extrémités est pourvue d'une fourche de centrage 44 et 45.

Chaque fourche comporte une pièce 46 de centrage vertical de forme générale en U, dont les extrémités de chaque branche présentent des rampes opposées convergentes 47 et 48 pour un centrage en fond de gorge.

L'immobilisation verticale est complétée par une immobilisation latérale apportée par deux doigts latéraux 49 et 50 solidarisés sur le côté extérieur de chaque pièce en U réalisant ainsi une fourche du type trident.

La conformation de ces doigts latéraux est par exemple identique à celle des extrémités des pièces en U sous la forme de rampes convergentes, formant les chants latéraux de la plaque-traverse en autocentrage au fond du volume de réception.

Le montage d'assemblage de la carrosserie sur le véhicule porteur s'effectue avec un certain eu pour garantir le léger débattement permettant d'effectuer le verrouillage par encliquetage à l'avant.

En vue de généraliser la présente protection, on décrira ci-après différents types d'arrière de châssis de la carrosserie déposable en liaison avec le châssis de camion et ceci en référence aux figures 31 à 36.

L'arrière de la base-châssis 16 de la carrosserie déposable affecte la forme générale d'une crosse, et plus particulièrement la forme d'une crosse de pistolet, c'est-à-dire la forme d'un plateau qui se poursuit verticalement vers le bas par le retour 29.

Cette forme technique décrite plus en détail ci-après, remplit plusieurs fonctions :
. elle forme, dans sa partie inférieure, un support pour le crochet d'attelage ;
. elle réalise le dégagement nécessaire par rapport au châssis-camion et une protection de l'extrémité de celui-ci ;
. elle permet d'obtenir une position de crochet d'attelage basse nécessaire dans le cas de remorques dites équilibrées ;
. elle permet de placer le crochet d'attelage en retrait par rapport à l'ensemble de centrage ;
. le crochet d'attelage est placé le plus près possible de la roue arrière, de manière à diminuer le couple dû au report de charge.

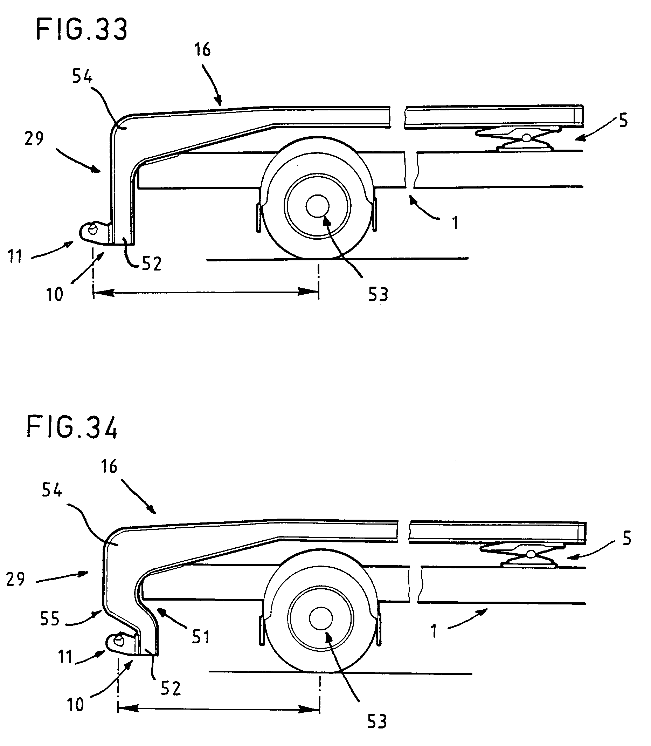

L'extrémité basse du retour 29 porte le support 10 du crochet d'attelage 11 qu'il est préférable, mais non nécessaire de rapprocher de l'essieu arrière, afin de diminuer le couple dû au report de charge de la remorque sur le camion, transmis par le crochet d'attelage, comme le montrent les figures 33 et 34.

Afin de réaliser le rapprochement du crochet d'attelage et donc de l'extrémité basse du retour 29 de l'arrière de la base-châssis 16 par rapport à l'essieu arrière, la carrosserie amovible présentera une incurvation 51 avec prolongation de préférence horizontale vers l'avant, puis un coude vers le bas se prolongeant par une branche terminale verticale 52, décalée vers l'essieu arrière 53 par rapport à la position de la naissance 54 du retour 29 vers le bas.

Cette conformation laisse apparaître une forme enveloppante 55, permettant de contourner et de protéger l'extrémité arrière du châssis de camion, qui peut ainsi se prolonger plus vers l'arrière, à partir de l'essieu arrière 53.

Cette conformation assure en outre un emplacement protégé et en retrait pour le dispositif ou le mécanisme de centrage et d'immobilisation latérale 30 choisi, venant s'engager soit sur l'arrière du châssis de camion soit sur une structure complémentaire appropriée placée à proximité sur le châssis de camion.

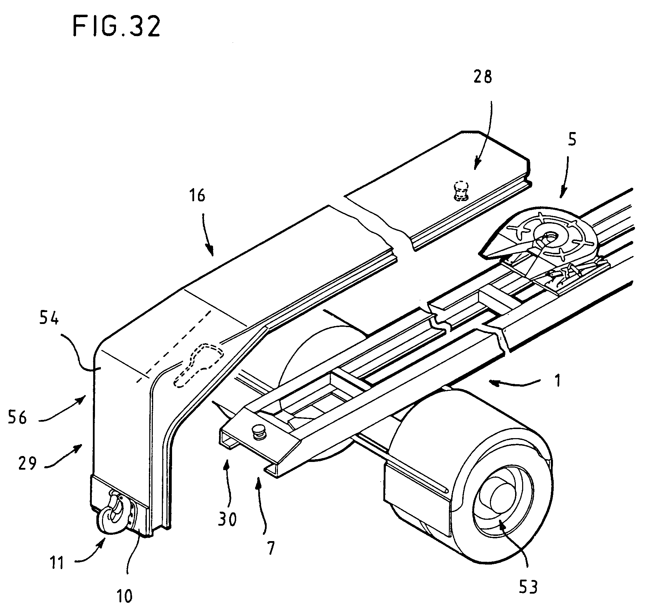

Cette fonction générale peut être remplie par un doigt de centrage sur une traverse inclinée arrière du châssis 1 coopérant avec un évidement de centrage que présente en regard la sous-face de la partie arrière de la base-châssis 16, comme représenté sur les figures 31 et 32.

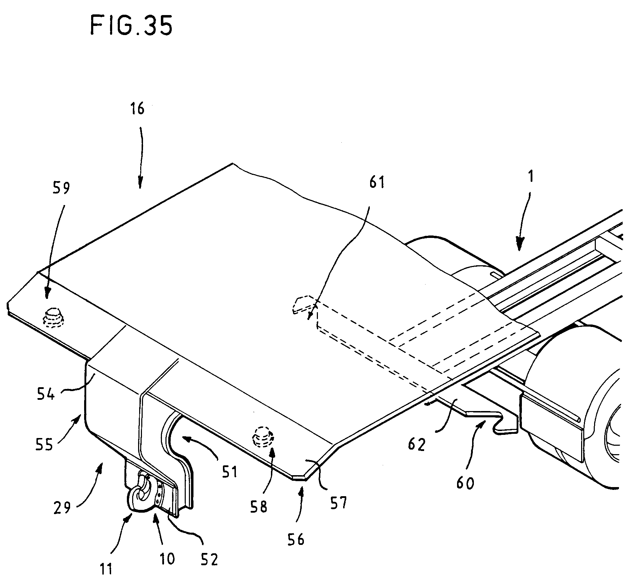

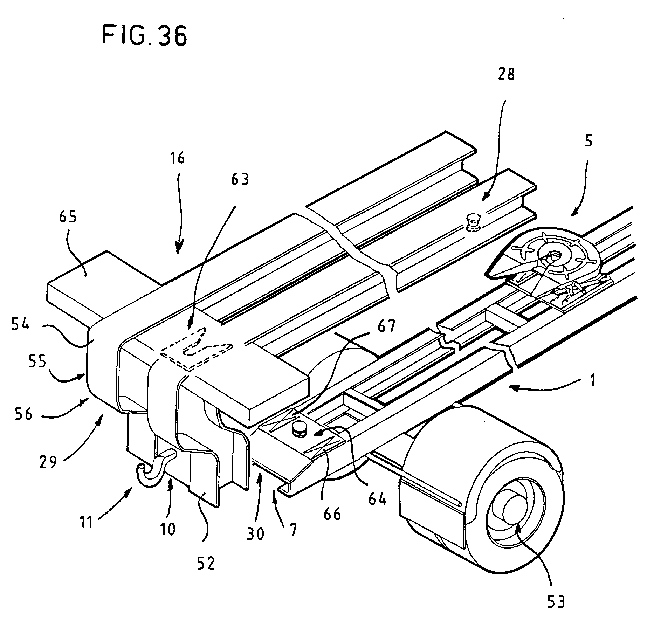

Après avoir décrit les formes générales avec ou sans retrait de l'arrière de la base-châssis 16 de la carrosserie déposable, on décrira ci-après, à titre purement illustratif, deux exemples de réalisation mettant en oeuvre ces formes avec différents moyens d'immobilisation latérale et de centrage, en référence aux figures 35 et 36.

L'arrière 56 de la base-châssis 16 peut, par exemple, affecter la forme d'un plan incliné 57 sur lequel est rapporté, en partie centrale, le retour 29 (figure 35).

Le plan incliné 57 présente en sous-face et à chacune de ses extrémités, des éléments de centrage et de maintien, par exemple des pièces conformées en champignon 58 et 59 destinées à coopérer avec des éléments de centrage 60 et 61 de forme générale en "V" dont est pourvue, sur chacune de ses extrémités, une platine de centrage 62, solidarisée en position inclinée à l'extrémité arrière des longerons du châssis de camion. L'inclinaison de la platine de centrage est identique à celle du plan incliné 57.

Une autre réalisation possible est représentée sur la figure 36. Elle procède du même principe général inventif.

L'arrière de la base-châssis 16 de la carrosserie déposable comporte, entre les deux longerons, une pièce de centrage 63 du type coulisseau-agrafe, coopérant avec un doigt de centrage 64 monté sur l'arrière du châssis-camion. Ce doigt 64 présente deux butées verticales de limitation du jeu mécanique.

Par ailleurs, l'arrière de la base-châssis 16 comporte une plaque transversale d'appui 65 qui vient reposer sur deux zones 66 et 67 prévues à l'extrémité des longerons du châssis-camion.

Dans cette réalisation, afin de faciliter le montage, les extrémités arrières des longerons du châssis-camion présentent chacune une rampe inclinée vers le bas.

On rappelle ici que dans les différentes variantes, le blocage longitudinal est assuré par un organe spécifique disposé à l'extrémité avant du châssis de carrosserie déposable et du châssis de camion.

Cet organe assure simultanément l'appui principal nécessaire à la charge afin de soulager l'arrière.

Le fonctionnement d'ensemble est illustré par les figures 21 à 26.

La carrosserie amovible est déposée à vide ou chargée en vue de rendre le véhicule moteur disponible pour d'autres tâches de transport.

Le maintien de la carrosserie est assuré à l'avant par les béquilles rabattables et, à l'arrière, par la reprise d'effort à travers le crochet d'attelage portant sur le timon reposant sur le sol par l'intermédiaire des pieds 14. La carrosserie est maintenue ainsi en équilibre stable par un appui au moins en trois points.

Comme indiqué, on peut bien entendu se dispenser du maintien apporté par le timon de la remorque en équipant l'arrière de la carrosserie, au niveau du support de crochet d'attelage ou autre par des béquilles additionnelles 21 et 22.

On peut également maintenir l'arrière de la carrosserie par tout autre moyen classique de soutien.

On décrira maintenant le déroulement d'un programme caractéristique d'exploitation commerciale par une entreprise de transport en expliquant simultanément les différentes phases de fonctionnement de l'unité routière selon l'invention en référence aux figures 21 à 26.

Le véhicule moteur est affecté tout d'abord à un transport de marchandises à l'aide d'une semi-remorque 48 après avoir été adapté en véhicule tracteur (figure 21).

Arrivé à destination , il est désaccouplé de sa semi-remorque 51 (figure 22) et conditionné pour servir de véhicule porteur-remorqueur par la simple opération de déplacement de sa sellette jusqu'à l'endroit prévu sur son châssis (figure 23).

Ainsi adapté, il se rapproche de la carrosserie porteuse à laquelle il va s'accoupler en s'insérant dessous. Celle-ci, en attente, est disposée chargée et attelée à une remorque sur une aire de chargement en vue du roulage jusqu'au lieu de livraison (figure 24).

Le véhicule moteur se met en ligne et se présente en marche arrière, face à la carrosserie déposée soutenue par ses béquilles et son maintien arrière. Il s'insère sous la carrosserie en vue de son accouplement (figure 25).

Arrivé en contact, l'accouplement s'effectue rapidement de la façon suivante. Le mécanisme d'autocentrage reçoit la plaque-traverse 7 qui vient se mettre en place dans sa structure de réception. Simultanément, la cheville ouvrière vient s'encliqueter dans le verrou de la sellette grâce au jeu existant. Il suffit de la verrouiller.

Le centrage-maintien arrière et le point d'appui-pivot à l'avant assurent la fixation complète de la carrosserie sur le châssis du véhicule devenu porteur-remorqueur qui emporte, après retrait et escamotage des béquilles et du soutien arrière, l'ensemble roulant constitué ainsi en convoi routier.

Arrivé à destination, le véhicule porteur abandonne l'ensemble routier auquel il était accouplé en se désolidarisant, de façon inverse aux opérations ci-dessus, de la carrosserie déposable et, après déploiement des béquilles rabattables et mise en prise de l'appui arrière, il se dégage de la carrosserie soutenue dans une position de maintien stable à l'état déposé.

Après désolidarisation de la sellette, une simple manoeuvre de marche avant suffit pour libérer totalement le véhicule moteur.

La carrosserie portée par ses béquilles et son soutien arrière peut être abandonnée sur une aire de déchargement. Après l'adaptation prévue, le véhicule porteur peut devenir tracteur pour une nouvelle utilisation de transport pendant que le déchargement s'effectue.

Le plein emploi du véhicule moteur est ainsi assuré avec le minimum de temps morts.

En phase terminale de chargement, l'ensemble est configuré tel que représenté sur les figures 24, 27 et 29. Il est prêt à être tracté par un autre véhicule moteur convenablement adapté.

## Revendications

1. Unité routière notamment du type porte-véhicules, scindable en un véhicule porteur-remorqueur (8) et une structure porteuse, unité routière formée d'une carrosserie déposable (9) sans essieu portée par le véhicule porteur-remorqueur (8), et d'une remorque à essieux centraux, c'est à dire sans train avant directeur, attelée à la carrosserie déposable, la carrosserie étant déposable à l'état attelée et en charge sans l'emploi de moyens extérieurs de manutention, le véhicule porteur-remorqueur (8) comportant un organe d'accouplement (5) à immobilisation longitudinale et appui situé à l'avant de son châssis et la carrosserie déposable (9) présentant à son extrémité arrière un support (10) de crochet d'attelage, ladite carrosserie déposable (9) étant formée d'une base-châssis (16) et d'une structure supérieure, carrosserie déposable (9) soutenue de façon stable à l'état déposé, position dans laquelle le véhicule porteur-remorqueur (8) peut venir s'encastrer sous ladite carrosserie en vue d'une solidarisation mutuelle par une simple opération d'accouplement, unité routière dans laquelle la base-châssis (16) de la carrosserie déposable (9) est fixée de façon rigide et directe au châssis du véhicule porteur-remorqueur (8) et comporte, un moyen d'accouplement complémentaire pour son accouplement avec l'organe d'accouplement (5) du véhicule porteur-remorqueur, et des moyens d'immobilisation coopérant avec le châssis du véhicule porteur-remorqueur (8), caractérisée en ce que :
. les moyens de soutien dans la position stable déposée attelée de la structure porteuse comprennent, en plus des moyens de soutien avant ménagés sur la carrosserie déposable (9), un moyen de soutien intermédiaire, (10) ou (14) ou (21,22), situé dans la région d'accouplement s'étendant entre l'essieu arrière du véhicule porteur-remorqueur (8) et le front avant de la remorque, constituant un point d'appui intermédiaire pour la structure porteuse ;
. le support (10) de crochet d'attelage est disposé de façon que le crochet (11) d'attelage soit à un niveau bas et proche de l'essieu arrière.

2. Unité routière selon la revendication 1, caractérisée en ce que le support (10) du crochet (11) d'attelage est porté par un retour (29) disposé à l'extrémité arrière de la base-châssis (16) et coudé vers l'essieu arrière puis dirigé vers le bas.

3. Unité routière selon les revendications 1 et 2, caractérisée en ce que le retour (29) comprend les moyens d'immobilisation et de centrage (30) avec l'extrémité arrière du châssis.

4. Unité routière selon les revendications 1, 2 et 3, caractérisée en ce que le point d'appui intermédiaire de la structure porteuse dans sa position stable déposée est un appui (14) au sol situé sous le timon de remorque.

5. Unité routière selon les revendications de 1 à 3, caractérisée en ce que le moyen de soutien intermédiaire est sur la carrosserie déposable.

6. Unité routière selon la revendication 5, caractérisée en ce que le moyen de soutien intermédiaire est situé au niveau du retour (29).

7. Unité routière selon la revendication 6, caractérisée en ce que le retour (29) d'attelage comprend le point d'appui intermédiaire de la structure porteuse dans sa position stable déposée.

8. Unité routière selon l'une quelconque des revendications précédentes, caractérisée en ce que le retour (29) présente une forme générale technique en crosse comportant une naissance (54) formée d'une incurvation (51) avec prolongation vers l'avant délimitant une forme enveloppante (55) se poursuivant par un coude dirigé vers le bas qui se prolonge par une branche terminale (52), décalée vers l'essieu arrière (53) par rapport à la position de la naissance (54), ladite branche terminale (52) portant le support (10) du crochet d'attelage (11).

9. Unité routière selon la revendication 8, caractérisée en ce que le retour (29) comporte en sous-face des moyens d'immobilisation et de centrage (30) avec le châssis (1).

10. Unité routière selon la revendication 8, caractérisée en ce que la forme enveloppante (55) contourne l'arrière du châssis (1).

11. Unité routière selon la revendication 8, caractérisée en ce que l'incurvation (51) présente dans sa forme enveloppante (55) en regard de l'extrémité du châssis les moyens d'immobilisation et de centrage (30) coopérant avec l'extrémité du châssis.

12. Unité routière selon les revendications précédentes de 8 à 11, caractérisée en ce que le retour (29) d'attelage situé à l'arrière de la base-châssis (16) présente une incurvation (51) avec prolongation horizontale vers l'avant, puis un coude vers le bas se prolongeant par une branche terminale verticale (52) décalée vers l'essieu arrière (53) par rapport à la position de la naissance (54) du retour (29) vers le bas pour réaliser une forme enveloppante (55) permettant de contourner et de protéger l'extrémité arrière du châssis de camion

13. Unité routière selon la revendication 8, caractérisée en ce que la forme enveloppante (55) est remplacée par une forme droite.

14. Unité routière selon l'une quelconque des revendications 8 à 13, caractérisée en ce que le retour (29) est réalisé sous la forme d'une pièce rapportée sur le châssis et se prolonge jusqu'à l'organe d'accouplement (5).

15. Unité routière selon la revendication 1, caractérisée en ce que les moyens d'immobilisation et de centrage (30) situés à l'extrémité arrière du châssis (1) du véhicule porteur comportent une plaque-traverse (7) montée à une longueur constante "D" du point d'appui de l'organe d'accouplement, quel que soit le type de véhicule porteur-remorqueur.

16. Unité routière selon l'une quelconque des revendications précédentes, caractérisée en ce que les moyens d'immobilisation et de centrage (30) situés à l'arrière de la carrosserie sont des moyens à encastrement.

17. Unité routière selon l'une quelconque des revendications précédentes, caractérisée en ce que les moyens de centrage des moyens d'immobilisation et de centrage (30) sont des moyens d'autocentrage.

18. Unité routière selon la revendication 17, caractérisée en ce que la plaque traverse arrière (7) du châssis vient s'encastrer dans le moyen d'autocentrage.

19. Unité routière selon la revendication 15, caractérisée en ce que les moyens d'autocentrage sont réalisés sous la forme d'un logement ménagé pour recevoir la plaque traverse (7) d'extrémité arrière du châssis.

20. Unité routière selon l'une quelconque des revendications précédentes de 15 à 19, caractérisée en ce que la plaque-traverse (7) présente deux ouvertures (31), (32) au voisinage de ses extrémités, et en ce que les moyens d'autocentrage sont des doigts portés par l'arrière de la carrosserie, doigts de centrage coniques (33) et (34) portés par une platine-support (35) solidaire du retour (29) de partie arrière de la carrosserie, lesdits doigts étant prévus pour venir s'engager dans lesdites ouvertures de la plaque-traverse arrière (7).

21. Unité routière selon l'une quelconque des revendications de 15 à 20, caractérisée en ce que le moyen d'autocentrage des moyens d'immobilisation et de centrage (30) est un mécanisme à rampes de convergence se montant sur la plaque-traverse arrière (7).

22. Unité routière selon l'une quelconque des revendications précédentes de 15 à 21, caractérisée en ce que le mécanisme à rampe qui vient se monter sur la plaque-traverse (7) présente une zone rectangulaire (35) constituant le fond d'un volume convergent (36) par deux rampes convergentes inférieures (39), (40) et supérieures (41), (42) du retour arrière des poutres du support de la carrosserie, ladite zone de réception étant limitée par une plaque de fond (43) dont chacune des extrémités est pourvue d'une fourche de centrage.

23. Unité routière selon la revendication 22, caractérisée en ce que chaque fourche comporte une pièce (46) de centrage vertical de forme générale en U dont les extrémités de chaque branche présentent des rampes opposées convergentes (47) et (48), et en ce que l'immobilisation verticale est complétée par une immobilisation latérale apportée par deux doigts latéraux (49) et (50) solidarisés sur le côté extérieur de chaque pièce en U pour former une fourche du type trident.

24. Unité routière selon l'une quelconque des revendications précédentes de 8 à 12, caractérisée en ce que les moyens d'immobilisation latérale et de centrage (30) situés à l'arrière de la base-châssis (16) de la carrosserie déposable sont réalisés sous la forme d'un plan incliné (57) sur lequel est rapporté en partie centrale le retour (29), ledit plan incliné (57) présentant en sous-face et à chacune de ses extrémités des éléments de centrage et d'immobilisation latérale sous la forme de champignons (58) et (59) coopérant avec des éléments de centrage (60) et (61) de forme générale en V dont est pourvue, sur chacune de ses extrémités, une platine de centrage (62) à l'extrémité arrière des longerons du châssis de camion.

25. Unité routière selon l'une quelconque des revendications précédentes de 8 à 14, caractérisée en ce que les moyens d'immobilisation latérale et de centrage (30) situés à l'arrière de la base-châssis (16) sont réalisés sous la forme d'un doigt de centrage présent sur une traverse inclinée à l'extrémité du châssis de camion, coopérant avec un évidement de centrage correspondant que présente en regard l'arrière de la base-châssis (16).

26. Unité routière selon l'une quelconque des revendications précédentes de 8 à 14, caractérisée en ce que l'arrière de la base-châssis (16) de la carrosserie déposable présente, entre les deux longerons, une pièce de centrage (63), du type coulisseau-agrafe, coopérant avec un doigt de centrage (64) à deux butées verticales, montée sur l'arrière du châssis-camion.

27. Unité routière selon l'une quelconque des revendications précédentes, caractérisée en ce que la remorque est une remorque surbaissée.

## Claims

1. Road unit, particularly of the vehicle transporter type, which can be divided into a transporter-trailer vehicle (8) and a transporter structure, which road unit is formed of a removable bodywork (9) without an axle and supportable by the transporter-trailer vehicle (8) and a trailer with central axles, i.e. whithout a front steering axle, attachable to the removable bodywork, the bodywork being removable in the attached state and when laden without the use of external handling means, the transporter-trailer vehicle (8) comprising a coupling member (5) longitudinally immobilisable, and with a bearing point at the front of its chassis, and the removable bodywork (9) comprising at its rear end an attachment hook support (10), the said removable bodywork (9) being formed of a chassis base (16) and an upper structure, the removable bodywork (9) being suported in a stable manner in the removed state, in which position the transporter-trailer vehicle (8) can be driven and inserted under the said bodywork in order to render said bodywork and said transporter-trailer integral with one another by a simple coupling operation, in which road unit the chassis base (16) of the removable bodywork (9) is rigidly and directly securable to the chassis of the transporter-trailer vehicle (8) and comprises an additional coupling means in order to be coupled to the coupling member (5) on the transporter-trailer vehicle, and immobilisation means cooperable with the chassis of the transporter-trailer vehicle (8), characterized in that :
. the supporting means in the stable, removed and attached state comprise, in addition to the front supporting means disposed on the removable bodywork (9), an intermediate support means (10) or (14) or (21,22) which is located in the vicinity of a coupling region located between a rear axle of the transporter-trailer vehicle (8) and a front face of the trailer, forming an intermediate bearing point for the transporter structure ;
. the attachment hook support (10) is disposed such that the attachment hook (11) is close to the ground and near the rear axle.

2. Road unit according to claim 1, characterized in that the support (10) for the attachment hook (11) is carried by a return member (29) disposed at the rear end of the chassis base (16) and angled towards the rear axle then directed downwards.

3. Road unit according to claim 1 and 2, characterized in that the return member (29) comprises means (30) for immobilisation and centring with the rear end of the chassis.

4. Road unit according to claims 1, 2 and 3, characterized in that the intemediate bearing point of the transporter structure in its removed, stable position is a point (14) bearing on the ground, located under a drawbar of the trailer.

5. Road unit according to any of claims 1 to 3, characterized in that the intermediate support means is located on the removable bodywork.

6. Road unit according to claim 5, characterized in that the intermediate support means is located on the return member (29).

7. Road unit according to claim 6, characterized in that the return member (29) comprises the intermediate bearing point for supporting the transporter structure in its stable, removed position.

8. Road unit according to any one of the preceding claims, characterized in that the return member (29) is essentially shaped in the form of a crook which extends from a point of origin (54) formed by a curvature (51) towards the front and delimits an enveloping shape (55) extended by a downwardly directed elbow which in turn is extended by an end branch (52) which is offset towards the rear axle (53) relative to the position of the point of origin (54), the said end branch (52) carrying the support means (10) for the attachment hook (11).

9. Road unit according to claim 8, characterized in that the return member (29) comprises, on its underside, means (30) for immobilising and centring with the chassis (1).

10. Road unit according to claim 8, characterized in that the enveloping shape (55) passes round the end of the chassis (1).

11. Road unit according to claim 8, characterized in that the curvature (51) in the enveloping shape (51) opposite the end of the chassis, has immobilising and centring means (30) which cooperates with the end of the chassis.

12. Road unit according to the preceding claims 8 to 11, characterized in that the return member (29) at the rear of the chassis base (16) has a curvature (51) with a horizontal extension towards the front, then a downwardly directed elbow extended by a vertical end branch (52) offset towards the rear axle (53) relative to the position of the point of origin (54) of the return member (29) at the bottom in order to produce an enveloping shape (55) enabling the rear end of the chassis to be passed around and protected.

13. Road unit according to claim 8, characterized in that the enveloping shape (55) is replaced by a straight shape.

14. Road unit according to any one of claims 8 to 13, characterized in that the return member (29) is in the form of a part added to the chassis base and extends as far as the coupling member.

15. Road unit according to claim 1, characterized in that the immobilising and centring means (30) at the rear end of the transporter vehicle chassis (1) comprise a plate crossmember (7) mounted at a constant length "D" from the coupling member bearing point, irrespective of the transporter-trailer vehicle type.

16. Road unit according to any one of the preceding claims, characterized in that the immobilising and centring means (30) at the rear of the bodywork are insertion means.

17. Road unit according to any one of the preceding claims, characterized in that the centring means of the immobilising and centring means (30) are self-centring means.

18. Road unit according to claim 17 when appendant to claim 15, characterized in that the chassis rear plate crossmember (7) is inserted in the self-centring means.

19. Road unit according to claim 15, characterized in that the self-centring means are in the form of a housing provided so as to accomodate the chassis rear end plate crossmember (7).

20. Road unit according to any one of the preceding claims 15 to 19, characterized in that the plate crossmember (7) has two apertures (31),(32) in the vicinity of its ends, and in that the self-centring means are fingers carried by the rear part of the bodywork, the said centering fingers (33) and (34) being conical and carried by a support plate (35) integral with the return member (29) on the rear part of the bodywork, the said fingers being provided so as to engage the said apertures in the rear plate crossmember (7).

21. Road unit according to any one of the claims 15 to 20, characterized in that the means for self-centring the immobilising and centring means (30) is a mechanism with converging slopes arranged to receive the rear plate crossmember (7).

22. Road unit according to the preceding claims 15 to 21, characterized in that the mechanism with slopes which receives the plate crossmember (7) has a rectangular area (35) forming the base of a converging space (36) by means of two lower (39),(40) and upper (41),(42) converging slopes of the rear return member of the bodywork-supporting beams, the said receiving area being limited by a base plate (43) of which each end is provided with a centring fork.

23. Road unit according to claim 22, characterized in that each fork comprises a generally U-shaped vertical centring part (46) of which the ends of each branch have converging opposite slopes (47) and (48), and in that immobilisation in the vertical direction is complemented by lateral immobilisation performed by two lateral fingers (49) and (50) which are integral with the outside of each U-shaped part so as to form a trident-type fork.

24. Road unit according to any one of the preceding claims 8 to 12, characterized in that the lateral immobilising and centring means (30) at the rear of the chassis base (16) of the removable bodywork are in the form of an inclined plane (57) at the centre of which the return member (29) is located, the said inclined plane (57) having on its underside, at each of its ends, lateral immobilising and centring means in the form of mushroom-shaped elements (58) and (59) cooperating with generally V-shaped centring notches (60) and (61) provided at each end of a centring plate (62) at the rear end of the chassis sidemembers.

25. Road unit according to any one of the preceding claims 8 to 14, characterized in that the lateral immobilising and centring means (30) at the rear of the chassis base (16) are in the form of a centring dog on an inclined crossmember at the end of the transporter-trailer vehicle chassis, cooperating with a corresponding centring recess located opposite on the rear of the chassis base.

26. Road unit according to any one of the preceding claims 8 to 14, characterized in that, between the two sidemembers, the rear of the chassis base (16) of the removable bodywork has a centring part (63), of the side-clamp type, which co-operates with a centring dog (64) having two vertical stops and is mounted on the rear of the chassis.

27. Road unit according to any one of the preceding claims, characterized in that the trailer is of the low-loader type.

## Patentansprüche

1. Straßenfahrzeug, insbesondere in der Bauart als Auto-Transporter, das in einem Trag-Zugfahrzeug (8) und in einem tragenden Gerüst getrennt werden kann, wobei das Straßenfahrzeug aus einem ausbaubaren Aufbau (9), der ohne Achse ist und von dem Trag-Zugfahrzeug (8) getragen wird, und aus einem Anhänger mit zentralen Achsen, d.h. ohne vorderen Lenkschemel, der an dem ausbaubaren Aufbau angekoppelt ist, gebildet ist, wobei der Aufbau im angekoppelten Zustand und beladen ohne die Verwendung von äußeren Fördereinrichtungen ausgebaut werden kann, wobei das Trag-Zugfahrzeug (8) einen Koppelungsteil (5) zum Feststellen in Längsrichtung und eine Abstützung im vorderen Bereich seines Fahrgestells aufweist, und wobei der ausbaubare Aufbau (9) in seinem hinteren Bereich einen Sockel (10) für einen Kupplungshaken aufweist, wobei der ausbaubare Aufbau (9) aus einem Gestell (16) und aus einem oberen Gerüst gebildet ist, wobei der ausbaubare Aufbau (9) im ausgebauten Zustand stabil gestützt wird, wobei in dieser Stellung das Trag-Zugfahrzeug (8) unter dem Aufbau für eine gegenseitige Verbindung durch einen einfachen Koppelungsvorgang fahren kann, wobei das Straßenfahrzeug, in dem das Gestell (16) des ausbaubaren Aufbaus (9) starr und unmittelbar an dem Fahrgestell des Trag-Zugfahrzeuges (8) befestigt ist, eine zusätzliche Koppelungsvorrichtung für seine Koppelung mit der Koppelungsvorrichtung (5) des Trag-Zugfahrzeuges und Vorrichtungen für das Feststellen, die mit dem Fahrgestell des Trag-Zugfahrzeuges (8) zusammenwirken enthält,
**dadurch gekennzeichnet,** daß
- die Einrichtungen zur Abstützung in der stabilen, ausgebauten, gekoppelten Stellung des tragenden Gerüstes zusätzlich zu den vorderen Vorrichtungen zur Abstützung, die auf dem ausbaubaren Aufbau (9) angeordnet sind, eine Vorrichtung für eine Zwischenabstützung (10) oder (14) oder (21,22) enthalten, die in dem Bereich der Koppelung liegt, der sich zwischen der hinteren Achse des Trag-Zugfahrzeuges (8) und der vorderen Stirnseite des Anhängers erstreckt, und einen dazwischenliegenden Abstützpunkt für das tragende Gerüst bildet;
- der Sockel (10) für einen Kupplungshaken derart angeordnet ist, daß der Kupplungshaken (11) sich in einer tiefen Lage und in der Nähe der hinteren Achse befindet.

2. Straßenfahrzeug nach Anspruch 1,
**dadurch gekennzeichnet,** daß
der Sockel (10) für den Kupplungshaken (11) von einem Rücksprung (29) getragen ist, der an dem hinteren Ende des Gestells (16) angeordnet, zu der Hinterachse hin gekröpft und dann nach unten gerichtet ist.

3. Straßenfahrzeug nach den Ansprüchen 1 und 2,
**dadurch gekennzeichnet,** daß
der Rücksprung (29) die Vorrichtungen für das Feststellen und Zentrieren (30) mit dem hinteren Ende des Fahrgestells enthält.

4. Straßenfahrzeug nach den Ansprüchen 1, 2 und 3,
**dadurch gekennzeichnet,** daß
der dazwischenliegende Abstützpunkt des tragenden Gerüstes in seiner ausgebauten, stabilen Stellung eine Stütze (14) am Boden ist, die unter der Deichsel des Anhängers angeordnet ist.

5. Straßenfahrzeug nach den Ansprüchen 1, 2 und 3,
**dadurch gekennzeichnet,** daß
sich die Vorrichtung für eine dazwischenliegende Abstützung auf dem ausbaubaren Aufbau befindet.

6. Straßenfahrzeug nach Anspruch 5,
**dadurch gekennzeichnet,** daß
sich die Vorrichtung für eine dazwischenliegende Abstützung im Bereich des Rücksprunges (29) befindet.

7. Straßenfahrzeug nach Anspruch 6,
**dadurch gekennzeichnet,** daß
der Rücksprung (29) für die Koppelung den dazwischenliegenden Abstützpunkt des tragenden Gerüstes in seiner ausgebauten, stabilen Stellung enthält.

8. Straßenfahrzeug nach einem der vorhergehenden Ansprüche,
**dadurch gekennzeichnet,** daß
der Rücksprung (29) eine weitgehend gekrümmte Form aufweist, mit einem Ursprung (54), der aus einer Krümmung (51) gebildet ist, mit einer Verlängerung nach vorne, die eine Ummantelung (55) abgrenzt, die durch einen Knick nach unten fortgesetzt ist, der durch ein Endstück (52) verlängert wird, das gegenüber der Lage des Ursprunges (54) zu der hinteren Achse (53) versetzt ist, wobei das Endstück (52) den Sockel (10) für den Kupplungshaken (11) trägt.

9. Straßenfahrzeug nach Anspruch 8,
**dadurch gekennzeichnet,** daß
der Rücksprung (29) auf seiner Unterseite Vorrichtungen Feststellen und Zentrieren (30) mit dem Fahrgestell (1) enthält.

10. Straßenfahrzeug nach Anspruch 8,
**dadurch gekennzeichnet,** daß
die Ummantelung (55) das hintere Ende des Fahrgestells (1) umgibt.

11. Straßenfahrzeug nach Anspruch 8,
**dadurch gekennzeichnet,** daß
die Krümmung (51) in ihrer Ummantelung (55) gegenüber dem Ende des Fahrgestells die Vorrichtungen für das Feststellen und Zentrieren (30) aufweist, die mit dem Ende des Fahrgestells zusammenwirken.

12. Straßenfahrzeug nach einem der Ansprüche 8 bis 11,
**dadurch gekennzeichnet,** daß
der Rücksprung (29) für die Koppelung, der hinten an dem Gestell (16) angeordnet ist, eine Krümmung (51) mit einer waagrechten Verlängerung nach vorne, dann einen Knick nach unten aufweist, der durch ein senkrechtes Endstück (52) verlängert ist, das gegenüber der Lage des Urspunges (54) des Rücksprunges (29) zu der hinteren Achse (53) hin nach unten versetzt ist, woraus sich eine Ummantelung (55) für eine Umgebung und für einen Schutz des hinteren Endes des Fahrgestells des Fahrzeuges ergibt.

13. Straßenfahrzeug nach Anspruch 8,
**dadurch gekennzeichnet,** daß
die Ummantelung (55) durch eine gerade Form ersetzt ist.

14. Straßenfahrzeug nach einem der Ansprüche 8 bis 13,
**dadurch gekennzeichnet,** daß
der Rücksprung (29) in Form eines Teiles ausgeführt ist, das auf dem Gestell angebracht und bis zu dem Koppelungsteil (5) verlängert ist.

15. Straßenfahrzeug nach Anspruch 1,
**dadurch gekennzeichnet,** daß
die Vorrichtungen für das Feststellen und Zentrieren (30), die am hinteren Ende des Fahrgestells (1) des Trag-Zugfahrzeuges angeordnet sind, eine Querplatte (7) enthalten, die bei einem konstanten Abstand "D" vom Stützpunkt des Koppelungsteils angeordnet ist, und zwar unabhängig von der Bauart des Trag-Zugfahrzeuges.

16. Straßenfahrzeug nach einem der vorhergehenden Ansprüche,
**dadurch gekennzeichnet,** daß
die Vorrichtungen für das Feststellen und Zentrieren (30) hinten an dem Aufbau Einbauvorrichtungen sind.

17. Straßenfahrzeug nach einem der vorhergehenden Ansprüche,
**dadurch gekennzeichnet,** daß
die Vorrichtungen für das Zentrieren der Vorrichtungen, für das Feststellen und Zentrieren (30) Vorrichtungen für eine Auto- bzw. Selbstzentrierung sind.

18. Straßenfahrzeug nach Anspruch 17,
**dadurch gekennzeichnet,** daß
die hintere Querplatte (7) des Gestells in die Vorrichtung für Autozentrierung eingebettet ist.

19. Straßenfahrzeug nach Anspruch 15,
**dadurch gekennzeichnet,** daß
die Vorrichtungen für Autozentrierung als Einpassung ausgeführt sind, um die Querplatte (7) am hinteren Ende des Gestells aufzunehmen.

20. Straßenfahrzeug nach einem der Ansprüche 15 bis 19,
**dadurch gekennzeichnet,** daß
die Querplatte (7) im Bereich ihrer Enden zwei Öffnungen (31), (32) aufweist, und daß die Vorrichtungen für Autozentrierung aus Fingern bestehen, die durch den hinteren Teil des Aufbaus getragen sind, und zwar aus kegelförmigen Zentrierfingern (33) und (34), die in einer Tragplatte (35) getragen sind, die mit dem Rücksprung (29) vom hinteren Bereich des Aufbaus verbunden ist, wobei die Finger dafür vorgesehen sind, in die Öffnungen der hinteren Querplatte (7) eingeführt zu werden.

21. Straßenfahrzeug nach einem der Ansprüche 15 bis 20,
**dadurch gekennzeichnet,** daß
die Vorrichtung für Autozentrierung der Vorrichtungen für das Feststellen und Zentrieren (30) eine Vorrichtung mit zusammenlaufenden Flächen ist, die auf der hinteren Querplatte (7) montiert ist.

22. Straßenfahrzeug nach einem der Ansprüche 15 bis 21,
**dadurch gekennzeichnet,** daß
die Vorrichtung mit zusammenlaufenden Flächen, die auf der hinteren Querplatte (7) montiert ist, einen rechteckigen Bereich (35) aufweist, der den Grund eines sich zuspitzenden Raumes (36) mit zwei unteren zusammenlaufenden Flächen (39), (40) und zwei oberen zusammenlaufenden Flächen (41), (42) des hinteren Rücksprunges der Träger des Supports des Aufbaus bildet, wobei der Aufnahmebereich durch eine Grundplatte (43) begrenzt ist und jedes Ende der Grundplatte mit einer Zentriergabel versehen ist.

23. Straßenfahrzeug nach Anspruch 22,
**dadurch gekennzeichnet,** daß
jede Gabel einen Teil (46) für die senkrechte Zentrierung enthält, der im allgemeinen U-förmig ist, und die Enden jedes Armes gegenüberliegende zusammenlaufende Flächen (47) und (48) aufweisen, und daß das senkrechte Feststellen durch ein seitliches Feststellen ergänzt ist, das durch zwei seitliche Finger (49) und (50) erreicht wird, die mit der Außenseite von jedem U-förmigen Teil verbunden sind, um eine dreiarmige Gabel zu bilden.

24. Straßenfahrzeug nach einem der Ansprüche 8 bis 12,
**dadurch gekennzeichnet,** daß
die Vorrichtungen für das seitliche Feststellen und Zentrieren (30) im hinteren Bereich des Gestells (16) des ausbaubaren Aufbaus in der Form einer schrägen Ebene (57) ausgeführt sind, an der im mittleren Bereich der Rücksprung (29) angebracht ist, wobei die schräge Ebene (57) an ihrer Unterseite und an jedem ihrer Enden pilzförmige Teile für das Zentrieren und das seitliche Feststellen (58) und (59) aufweist, die mit den Zentrierteilen (60) und (61) mit einer allgemeinen V-Form zusammenwirken, mit denen eine Zentrierplatte (62) an jedem ihrer Enden versehen ist, die am hinteren Ende des Längsträgers des Fahrgestells des Fahrzeuges angeordnet ist.

25. Straßenfahrzeug nach einem der Ansprüche 8 bis 14,
**dadurch gekennzeichnet,** daß
die Vorrichtungen für das seitliche Feststellen und Zentrieren (30), die im hinteren Bereich des Gestells (16) angeordnet sind, in der Form eines Zentrierfingers auf einem geneigten Querträger am Ende des Fahrgestells des Fahrzeuges ausgeführt sind, der mit einer entsprechenden Zentrieraussparung in dem gegenüberliegenden hinteren Bereich des Gestells (16) zusammenwirkt.

26. Straßenfahrzeug nach einem der Ansprüche 8 bis 14,
**dadurch gekennzeichnet,** daß
der hintere Bereich des Gestells (16) des ausbaubaren Aufbaus zwischen den beiden Längsträgern einen Zentrierteil (63) in der Art eines Gleitstückes enthält, der mit einem Zentrierfinger (64) mit zwei senkrechten Anschlägen zusammenwirkt und hinten am Fahrgestell des Fahrzeuges montiert ist.

27. Straßenfahrzeug nach einem der vorhergehenden Ansprüche,
**dadurch gekennzeichnet,** daß
der Anhänger ein Tiefladeanhänger ist.
